# EUROPEAN PATENT APPLICATION

(11) **EP 2 767 697 A1**
(43) Date of publication of application: **20.08.2014**
(21) Application number: 13155796.9
(22) Date of filing: 19.02.2013
(51) Int. Cl.: F02C 3/22, F02C 6/18, F02C 7/22, F02C 9/40, F23K 5/00, F23R 3/36

(54) **Gas turbine with fuel composition control**

(71) Applicant: Alstom Technology Ltd, 5400 Baden (CH)
(72) Inventor: Bernero, Stefano, 5452 Oberrohrdorf (CH); Graf, Frank, 5415 Nussbaumen (CH); Guidati, Gianfranco Ludovico, 8048 Zuerich (CH); Gassner, Martin, 8057 Zuerich (CH); Guethe, Felix, 4056 Basel (CH)

(57) **Abstract**

The invention refers to a method for operating a gas turbine plant. According to the method a first fuel gas (5) with a first fuel reactivity and a second fuel gas (14) with a second fuel reactivity which is higher than the first fuel reactivity are injected into a combustor (4, 15) of the gas turbine, and the ratio of the mass flows of the second fuel gas (14) to the first fuel gas (5) is controlled depending on the combustion behavior of the combustor (4, 15).

The disclosure further refers to a gas turbine plant configured to carry out the method.

## Description

### Technical field

The disclosure refers to a method for operating a gas turbine with active measures to condition the fuel composition as well as such a gas turbine.

### Background of the disclosure

Due to increased power generation by unsteady renewable sources like wind or solar existing gas turbine based power plants are increasingly used to balance power demand and to stabilize the grid. Thus improved operational flexibility is required. This implies that gas turbines are often operated at lower load than the base load design point, i.e. at lower combustor inlet and firing temperatures. Below certain limits, this reduces flame stability and burnout, with higher risk of flame loss (lean blow-off), increased pulsation (e.g. combustor pulsation as lean blow-off precursor), and increased CO emissions

At the same time, emission limit values and overall emission permits are becoming more stringent, so that it is required to operate at lower emission values, keep low emissions also at part load operation and during transients, as these also count for cumulative emission limits. State-of-the-art combustion systems are designed to cope with a certain variability in operating conditions, e.g. by adjusting the compressor inlet mass flow or controlling the fuel split among different burners, fuel stages or combustors. However, this is not sufficient to meet the new requirements, especially for already installed engines.

Low fuel reactivity is known to have a detrimental effect towards flame stability and burnout, which is disadvantageous at low load operation. In contrast high fuel reactivity might be detrimental at higher load and higher firing temperatures, where it might cause flashback, overheating, and increased NOx emissions. Fuel reactivity is given by the composition of the natural gas provided by the supply grid or other gas sources. With new and diverse gas sources being exploited, the fuel composition in the grid is often fluctuating. Often large amounts of inert gases or low concentration of C2+ (i.e. higher hydrocarbons that contain more than one carbon atom per molecule and have a higher reactivity than methane) are present. Therefore often gas with low reactivity has to be used.

The possible negative impact of low fuel reactivity has driven the development of ideas and solutions aiming to increase fuel reactivity. These are based on methane reforming technologies, such as steam reforming, catalytic partial oxidation, non-catalytic partial oxidation, autothermal reforming, and plasma reforming. They all aim at providing hydrogen to increase the reactivity of the fuel.

Reforming technologies to condition fuel by extracting at least part of it, processing it through a reformer, and then feeding it to the combustion system are described for example in US20100300110A1 and EP2206968A2. For solutions based on fuel reforming the integration effort into the power plant is high, which limits operational flexibility and applicability to existing plants. Also, some of these solutions include heat exchangers and therefore have big thermal inertia, require a long startup time and cannot respond sufficiently fast in case the gas turbine is changing due to dispatch requests or grid support requests.

### Summary of the disclosure

The object of the present disclosure is to propose a gas turbine and a method for operating a gas turbine, which enables stable, safe, and clean operation over a wide operating range. Further it enables the operation with fuel gas, which has low reactivity.

According to a first embodiment a gas turbine with a compressor, combustor, and a turbine comprises a fuel system for the combustor with a first fuel distribution system for a first fuel gas and a second fuel distribution system for a second fuel gas. The first fuel gas has a first fuel reactivity and the second fuel gas a second fuel reactivity, which is higher than the first fuel reactivity. The gas turbine further comprises a controller configured to control the ratio of the mass flows of the second fuel gas to the first fuel gas supplied to the combustor depending on the combustion behavior of the combustor during operation.

According to an embodiment the first fuel distribution system comprises a first fuel gas supply line with a first combustor fuel control valve. The second fuel distribution system comprises a second fuel gas supply line and a first control valve for high reactivity fuel. The second fuel line gas supply line can be connected to the first fuel gas supply line upstream of the first combustor fuel control valve, downstream of first combustor fuel control valve or the second fuel gas supply line can be directly connected to the combustor for fuel injection into the combustors.

The total fuel mass flow can be controlled depending on the load demand of the gas turbine plant.

According to an embodiment the gas turbine of the gas turbine plant is a sequential combustion gas turbine with a first combustor, a first turbine, a second combustor, and a second turbine. The gas turbine plant comprises a fuel supply system for the first combustor with a first fuel distribution system for the first fuel gas and a second fuel distribution system for the second fuel gas, and a fuel supply system for the second combustor with a first fuel distribution system for the first fuel gas and a second fuel distribution system for the second fuel gas.

The gas turbine controller can be configured to control the ratio of the mass flows of the second fuel gas to the first fuel gas supplied to the first combustor depending on the combustion behavior in the first combustor during operation. The gas turbine controller can additionally or alternatively be configured to control the ratio of the mass flows of the second fuel gas to the first fuel gas supplied to the second combustor depending on the combustion behavior in the second combustor during operation.

According to an embodiment the first fuel distribution system comprises a first fuel gas supply line with a first combustor fuel control valve and a first fuel gas supply line with a second combustor fuel control valve. The second fuel distribution system comprises a second fuel gas supply line and a first control valve for high reactivity fuel, and a second fuel gas supply line with a second control valve for high reactivity fuel. The second fuel gas supply lines can be connected to the first fuel gas supply lines upstream of the respective combustor fuel control valve, downstream of respective combustor fuel control valve or the second fuel gas supply lines can be directly connected to the combustor for fuel injection into the combustors.

In a further embodiment the gas turbine power plant comprises an electrolyzer to generate hydrogen as second fuel gas from water.

The electric power required to generate hydrogen can be supplied by the generator of the gas turbine plant. The electrolyzer can be directly connected to the generator for electric power supply or can be connected to a medium or low voltage power system of the gas turbine plant. During operation of the gas turbine the medium and low voltage power systems are typically fed by the generator. The medium voltage system is typically directly feed by the generator while the low voltage system is typically feed via a transformer.

According to a further embodiment a high temperature electrolysis can be used to reduce the electric power consumption of the electrolysis. The heat is supplied via a steam and/or hot water supply pipe from a heat source of the gas turbine plant. For example steam, preferably low grade steam of a heat recovery steam generator can be used. If the gas turbine is part of a combined cycle power plant with at least one heat recovery steam generator and at least one steam turbine low grade steam of a heat recovery steam generator, steam branched off from the steam turbine or return steam can be used as heat source for the electrolysis.

The gas turbine plant can further comprise an oxygen line from the electrolyzer to the compressor, to the air intake or to the combustor for injecting the oxygen produced during the electrolysis of the water. By injecting the hydrogen and/or the oxygen, the ignition delay time of the gases entering the combustor is reduced and the flame speed increased. This can improve burnout, i.e. reduce CO emissions and increases flame stability at low load.

According to a further embodiment the gas turbine plant comprises a hydrogen storage for accumulating and storing at least part of the hydrogen produced by the electrolyzer during a first operating period. At least part of the stored hydrogen can be released and fed to a combustor of the gas turbine during a second operating period to control the combustion behavior.

According to yet a further embodiment the gas turbine plant comprises an oxygen storage for accumulating and storing at least part of the oxygen produced by the electrolyzer during a first operating period. At least part of the stored oxygen can be released and fed to the compressor or a combustor of the gas turbine during a second operating period to control the combustion behavior by enhancing the combustion.

The use of the second fuel gas, respectively storage or release of the hydrogen as second fuel gas and/or of the oxygen to enhance combustion can be determined based on a schedule, which depends for example on the gas turbine load, the position of a variable inlet guide vane or another suitable operating parameter of the gas turbine.

In the subsequent section control of the ratio of the mass flows of the second fuel gas to the first fuel gas supplied to the first and/or second combustor is described. The same control methods can be applied to the addition of oxygen, i.e. an increase in the ratio of the mass flows of the second fuel gas to the first fuel gas is equivalent to an increase in the admixing of oxygen into the compressor or a combustor.

According to an embodiment the ratio of the mass flows of the second fuel gas to the first fuel gas supplied to the first and/or second combustor, is controlled depending on at least one gas turbine operating parameter.

For this control the gas turbine comprises corresponding measurement devices. This can be a measurement device to determine at least one of: the first fuel gas flow, the gas turbine load, a gas turbine operating temperature, the composition of the first fuel gas, the composition of the second fuel gas, the CO emissions, the unburned hydrocarbon content, the NOₓ emissions, the pulsation, typically within a specific frequency range, or the flame intensity and/or location (i.e. flame monitoring).

Problems related to combustion stability and emission at low gas turbine load can be mitigated with such a gas turbine by adding a portion of different second fuel with higher reactivity to the first fuel stream, upstream of the injection into the combustor. This additional second fuel can be provided by a separate source, therefore operational flexibility is maximized, as the fuel preparation and supply system for the additional second fuel is not limited by operation parameters of the GT or associated water/steam cycle. This feature is particularly favorable for retrofitting this solution into existing plants, as the integration effort and issues are reduced. Since, by reducing combustion stability issues and emissions, gas turbine operation is allowed at lower load than without application of this solution, operation costs (i.e. fuel costs due to lower fuel consumption at lower load) are reduced. Also, part of the generated electricity can be used for production of the additional fuel by electrolysis without negatively affecting the commercial aspect of plant operation. Addition of hydrogen produced by electrolysis is particularly advantageous, since an electrolyzer can work at high pressure, avoiding the need of additional compressors. Also, an electrolyzer can be started within a short time, which enables fast response, e.g. to variations in the gas turbine load requests. If low electricity consumption of electrolysis is targeted, the use of high temperature electrolysis technology allows for supplying part of the required energy in the form of heat, which increases the overall efficiency of the system. This heat can be extracted from the GT exhaust gas or the steam cycle without major impact on the plant since it represents a comparatively small portion of the total amount of transferred heat and low grade steam can be used, which cannot be effectively used in the water steam cycle.

The storage system can simply comprise a storage vessel, which is operated at the outlet pressure of the electrolyzer. The electrolyzer can be operated at an elevated pressure. For example at a pressure which is higher than the operating pressure of the gas turbine, or at a pressure which is higher than the maximum operating pressure of the gas turbine. Since the electrolyzer can typically be fed with water (in its liquid form) it can be pressurized, without a need for much compression power. The pressure vessel can be filled with hydrogen (respectively oxygen) at practically the elevated pressure level of the electrolyzer. The hydrogen (respectively oxygen) can be released and directly injected into a combustor of the gas turbine without a need for fuel gas compression from the storage vessel.

In a further refinement the storage system comprises a storage vessel, an electrolyzer, which is operating at a pressure which is at least 50% above the required fuel supply pressure of the gas turbine, and a turbine to recover part of the energy, which is released, when expanding the stored hydrogen (respectively oxygen) fuel for feeding it to a combustor.

In another embodiment the storage system comprises a liquefaction system and a liquid fuel storage vessel as well as a regasification system to reduce the required storage volume for storage of hydrogen (respectively oxygen).

Besides the gas turbine a method for operating such a gas turbine is subject of the present disclosure. According to one embodiment of the method for operating a gas turbine with at least a compressor, a combustor, a turbine, and a fuel system, a first fuel gas with a first fuel reactivity and a second fuel gas with a second fuel reactivity which is higher than the first fuel reactivity are injected into the combustor. The ratio of the mass flows of the second fuel gas to the first fuel gas is controlled depending on the combustion behavior of the combustor.

According to a further embodiment the ratio of the mass flows of the second fuel gas to the first fuel gas is controlled depending on a parameter indicative of the combustion behavior. This can be one or more of the following parameters: the CO emission, the NOₓ emission, local overheating and / or flashback risk, combustor pulsations due to flame instability and or lean blow-off, or the minimum load.

Flue gas recirculation is a known measure to improve NOₓ emissions for gas turbines and to increase the CO₂ concentration in the exhaust flow of a gas turbine and to thereby enhance the efficiency of a CO₂ capture plant, which can be installed downstream of the gas turbine. However, there is an increased risk of CO production with increasing oxygen depletion in the inlet air due to flue gas recirculation (i.e. with increased FGR ratio). To mitigate this drawback of flue gas recirculation can be mitigated with the proposed method of controlling the ratio of the mass flows of the second fuel gas to the first fuel gas, e.g. depending on operating parameters of the gas turbine.

This method can be used to also enable a wider operation window for flue gas recirculation. Since flue gas recirculation can increase the ignition delay time and can reduce the flame speed due to a change in the intake gas composition the fuel gas with higher reactivity can be used to counteract these effects of flue gas recirculation and therefore can enlarge the operation window for flue gas recirculation. For a gas turbine with flue gas recirculation the ratio of the mass flows of the second fuel gas to the first fuel gas can also be controlled depending on the flue gas recirculation ratio, i.e. the ratio of recirculated flue gas mass flow to the total intake mass flow of the gas turbine.

The CO emissions can be reduced by increasing the ratio of the mass flows of the second fuel gas to the first fuel gas while keeping the total heat input unchanged.

The NOₓ emissions can be reduced by reducing the ratio of the mass flows of the second fuel gas to the first fuel gas.

The operation range can be expanded to lower load (depending on the gas turbine lower load, in which operation is restricted can be for example below 40% or below 30% relative load) by increasing the ratio of the mass flows of the second fuel gas to the first fuel gas and by reducing the total heat input. This enables lower load operation and thereby reduces the minimum fuel consumption. This is especially helpful to reduce operating costs at low load demand of the grid, when the gas turbine is "parked" or in a standby mode.

According an embodiment for the operation of a sequential combustion gas turbine, which comprises a compressor, a first combustor, a first turbine, a second combustor and a second turbine, a fuel gas with a ratio of the mass flows of the second fuel gas to the first fuel gas, which is greater than zero that can be added into either only the first combustor or only the second combustor or into both the first combustor, and the second combustor.

According to a further embodiment of the method hydrogen is produced in an electrolyzer and this hydrogen is used as the second fuel gas. The electrolyzer can be powered by electricity produced from a generator of the plant.

The hydrogen can also be produced by high temperature electrolysis using electricity produced by a generator of the plant and using heat extracted from the gas turbine plant or a subsequent heat recovery steam generator or water steam cycle driven by steam from the heat recovery steam generator.

According to one embodiment the net electric power exported by a gas turbine power plant to an electric grid is reduced by deloading the gas turbine and by using at least part of the electric energy generated by the gas turbine plant to produce hydrogen. The hydrogen can be stored or feed into a combustor of the gas turbine and thereby reduce the net fuel consumption of the gas turbine plant.

According to yet another embodiment of the method at least part of the hydrogen produced is stored in a hydrogen storage during a first time period for later use during a second time period with low power demand of an electric grid.

The use of a hydrogen storage allows a reduction of the size of the electrolyzer, and therefore a reduction of plant size and costs. A first operating period can for example be a period with relatively high load, e.g. above 60% relative load (part load power relative to the base load power of the plant), or above 70% load. Typically no electrolysis is carried out during base load operation to avoid a reduction in base load net power delivered to the grid. The second operating period can be a period of low power demand, e.g. below 60% relative load and can even be below 30% relative load.

In one embodiment of the method oxygen produced during the electrolysis of water is injected into the combustor or upstream of the combustor to enhance the combustion. By injecting oxygen into the intake gas (or inlet air) of the compressor, into the compressor or directly into the combustor the reactivity of the fuel-oxidant mixture is increased (i.e. the ignition delay time is reduced and the flame speed increased). This leads to a more stable combustion and reduction of CO emissions at low load.

Furthermore the use of Oxygen can be used for operating a gas turbine plant with flue gas recirculation to increase oxygen content in the and therefore allow a higher flue gas recirculation ratio, which reduces the exhaust mass leaving the plant. In case of a downstream carbon capture (CO2 capture) the CO2 capture unit can be smaller and work more efficiently due to an increased CO2 concentration and thereby reduce the first cost and operating costs for carbon capture.

In a further embodiment the method is applied to a sequential combustion gas turbine comprising a compressor, a first combustor, a first turbine, a second combustor, and a second turbine. In this embodiment the ratio of the mass flows of the second fuel gas to the first fuel gas is controlled for the first combustor depending on the combustion behavior of the first combustor. Alternatively or in combination the ratio of the mass flows of the second fuel gas to the first fuel gas is controlled for the second combustor depending on the combustion behavior of the second combustor.

Typically a ratio of the mass flows of the second fuel gas to the first fuel gas does not need to be greater than zero at all times, i.e. the second fuel with higher fuel reactivity does not need to be injected into the combustor at all times. The second fuel addition is carried out depending on the composition of the first fuel gas and the gas turbine operation conditions, in particular as a function of gas turbine load.

In another embodiment of the method for operating a sequential combustion gas turbine the ratio of the mass flows of the second fuel gas to the first fuel gas is greater than zero for the fuel supply to only the first combustor to increase the flame stability at a low load of the first combustor when the second combustor is not in operation.

At a higher load, when the second combustor is also in operation the ratio of the mass flows of the second fuel gas to the first fuel gas is greater than zero for the fuel supply to only the second combustor to increase the flame stability at low load of the second combustor and to reduce CO emission due to low operating temperature of the combustor. At the same time the ratio of the mass flows of the second fuel gas to the first fuel gas can be kept at zero for the fuel supply to the first combustor.

A low load of a combustor is an operation with an operating temperature, which is below the design operating temperature of the combustor. It can for example be more than 20 K or more than 50 K below the absolute base load operating temperature of the combustor.

In a further embodiment of the method the ratio of the mass flows of the second fuel gas to the first fuel gas is greater than zero for the fuel supply to only some burners of a combustor or only some of the fuel nozzles of a burner. These burners or fuel nozzles can operate in a premixed mode but act as a stabilizer for other burners or combustors of the gas turbine like a conventional pilot flame.

According to an embodiment the ratio of the mass flows of the second fuel gas to the first fuel gas is controlled as a function of at least one of operating parameter of the gas turbine. Suitable control parameters can be the total fuel mass flow injected into the gas turbine, the gas turbine load, the relative gas turbine load, the composition of the first fuel gas, the composition of the second fuel gas. These parameters have a direct influence on the thermal load of the gas turbine and are an indication of the heat release in the combustors. A further suitable control parameter can be a gas turbine operating temperature, such as the turbine inlet temperature, the turbine exit temperature or local temperature indicative of the combustion process. In particular temperatures, which directly or indirectly indicate the flame position, such as a burner or combustor metal temperature or the temperature of a recirculation flow in a combustion chamber can be used to control the mass flow of second fuel fraction.

Since emissions give an indication of the combustion condition the CO emissions, the NOx emissions, or unburned hydrocarbon content (also called UHC) can be used to control the ratio of the mass flows of the second fuel gas to the first fuel gas.

Any other control signal indicative of an approach to a lean blow off limit or indicative of a flashback risk can also be used to control the ratio of the mass flows of the second fuel gas to the first fuel gas. Among others this can be the combustor pulsations or a flame monitor signal (typically an optical sensor).

The gas turbine can include a flue gas recirculation system, in which a part of the flue gas is admixed to the inlet gas of the gas turbine.

### Brief description of the drawings

The disclosure, its nature as well as its advantages, shall be described in more detail below with the aid of the accompanying drawings. Referring to the drawings:
Fig. 1 schematically shows an example of a gas turbine plant with a fuel system according to the present disclosure,
Fig. 2 schematically shows an example of a sequential combustion gas turbine plant with a fuel system according according to the present disclosure,
Fig. 3 schematically shows an example of a gas turbine plant with a fuel system according to the present disclosure including an electrolyzer,
Fig. 4 schematically shows an example of a gas turbine plant with a fuel system according to the present disclosure including a high temperature electrolyzer.

### Embodiments of the disclosure

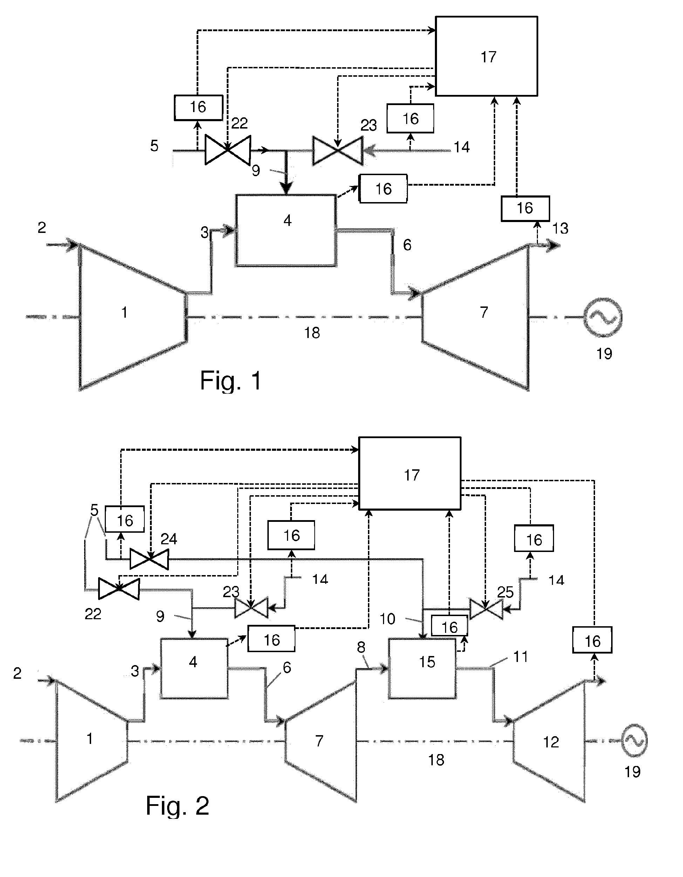

Fig. 1 shows a gas turbine plant with a single combustor gas turbine for implementing the method according to the disclosure. It comprises a compressor 1, a combustor 4, and a turbine 7. Fuel gas is introduced into the combustor 4, mixed with compressed air 3 which is compressed in the compressor 1, and combusted in the combustor 4. The hot gases 6 are expanded in the subsequent turbine 7, performing work.

Typically, the gas turbine plant includes a generator 19, which is coupled to a shaft 18 of the gas turbine.

A first fuel gas 5 can be controlled by a first combustor control valve 22 and fed to the combustor 4. A second fuel gas 14, which is a fuel gas with high fuel reactivity (i.e. short ignition delay time in the combustor), can be controlled by a first control valve for high reactivity fuel 23 and fed to the combustor 4. In the example shown the first fuel gas 5 and second fuel gas 14 are mixed and introduced as a first conditioned fuel 9 into the combustor 4.

The fuel gas composition of the first fuel gas 5 is detected by a sensor 16. The fuel gas composition of the second fuel gas 14 is detected by another sensor 16. The emissions and the composition of the exhaust gas 13 are detected by a further sensor 16, and the combustion can be monitored by yet another sensor 16. The measured data of the sensors 16 are transmitted to the controller 17 via control lines (indicated as dotted lines). Based on the measured data the controller determines the required ratio of the mass flows of the second fuel gas to the first fuel gas for complete and stable combustion and sends the corresponding control signals to the first combustor control valve 22 and the first control valve for high reactivity fuel 23.

In addition to the measurements indicated in the Figures the controller can use all measurement data available for the normal control of the gas turbine to determine the best ratio of the mass flows of the second fuel gas to the first fuel gas (the corresponding measurements are not shown here).

Fig. 2 schematically shows a gas turbine plant with a sequential combustion gas turbine for implementing the method according to the disclosure. It comprises a compressor 1, a first combustor 4, a first turbine 7, a second combustor 15 and a second turbine 12. Typically, it includes a generator 19 which is coupled to a shaft 18 of the gas turbine.

Fuel gas is supplied to the first combustor 4, mixed with air which is compressed in the compressor 1, and combusted. The hot gases 6 are partially expanded in the subsequent first turbine 7, performing work. As soon as the second combustor is in operation, additional fuel is added to the partially expanded gases 8 and combusted in the second combustor 15. The hot gases 11 are expanded in the subsequent second turbine 12, performing work.

A first fuel gas 5 can be controlled by a first combustor control valve 22 and fed to the first combustor 4. A second fuel gas 14, which is a fuel gas with high reactivity (i.e. short ignition delay time in the combustor), can be controlled by a first control valve for high reactivity fuel 23 and fed to the first combustor 4. In the example shown the first fuel gas 5 and second fuel gas 14 are mixed and introduced as a first conditioned fuel 9 into the first combustor 4.

The first fuel gas 5 can be controlled by a second combustor control valve 24 and fed to the second combustor 15. The second fuel gas 14, which is a fuel gas with high fuel reactivity, can be controlled by a second control valve for high reactivity fuel 25 and fed to the second combustor 15. In the example shown the first fuel gas 5 and second fuel gas 14 are mixed and introduced as a second conditioned fuel 10 into the second combustor 15.

The fuel gas composition of the first fuel gas 5 is detected by a sensor 16. The fuel gas composition of the second fuel gas 14 is detected by another sensor 16. The emissions and the composition of the exhaust gas 13 are detected by a further sensor 16. The combustion in the first combustion chamber 4 can be monitored by another sensor 16, and the combustion in the second combustion chamber 15 can be monitored by another sensor 16. The measured data of the sensors 16 are transmitted to the controller 17 via control lines (indicated as dotted lines). Based on the measured data the controller determines the required ratio of the mass flows of the second fuel gas to the first fuel gas for complete and stable combustion in the first and second combustor 4, 15 and sends the corresponding control signals to the first combustor control valve 22 and the first control valve for high reactivity fuel 23 as well as to the second combustor control valve 24 and the second control valve for high reactivity fuel 25.

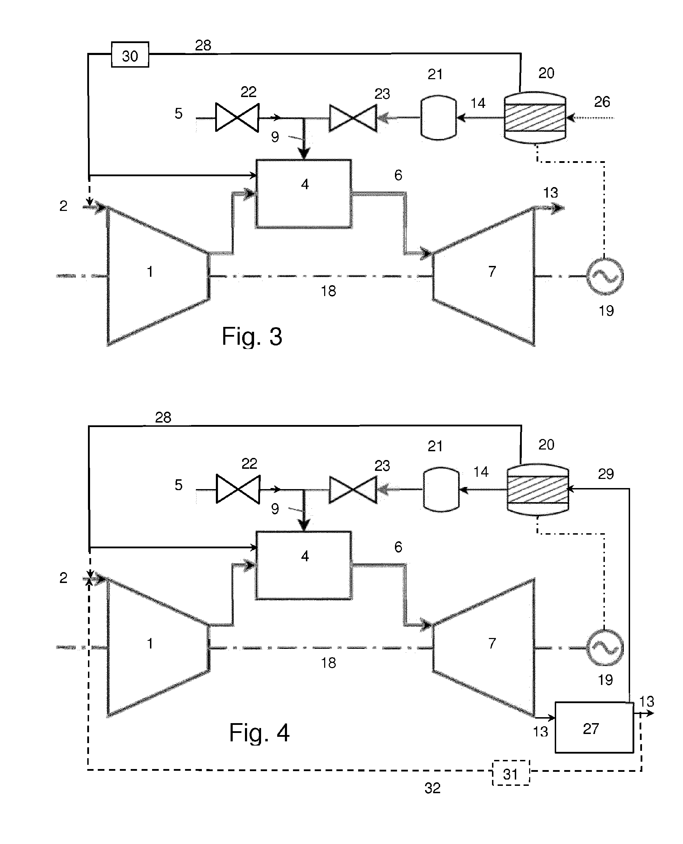

Fig. 3 schematically shows a second example of a plant with a single combustion gas turbine with a fuel system according to the present disclosure. Fig. 3 is based on Fig. 1. The example of Fig 3 additionally shows an electrolyzer 20. Water 26 is supplied to the electrolyzer 20 and hydrogen and oxygen 28 are generated in the electrolyzer using electricity generated by the generator 19. A hydrogen storage 21 is arranged downstream of the electrolyzer 20. The hydrogen can be supplied and controlled as second fuel gas 14 by the first control valve for highly reactive fuel gas to the first combustor 4.

In addition a line for oxygen 28 can be used to inject the oxygen which is a byproduct of the electrolysis into the combustor 4. An oxygen storage 30 is arranged downstream of the electrolyzer 20. Optionally the oxygen 28 can be injected into the compressor intake air. However, if the oxygen 28 is provided at a high pressure level is more efficient to inject it directly into the combustor.

Fig. 4 schematically shows a third example of a plant with a single combustion gas turbine with a fuel system according to the present disclosure. Fig. 4 is based on Fig. 3. The example of Fig 4 shows a high temperature electrolyzer 20. Hot water/steam 29 is supplied from a heat recovery steam generator 27 which is extracting waste heat from the gas turbine exhaust gases 13. Due to the use of hot water/ steam 29 the electricity consumption of the high temperature electrolyzer 20 can be reduced relative to the electrolyzer 20 of example shown in Fig. 3.

In Fig.4 a flue gas recirculation system is indicated with dotted lines as an option. Part of the exhaust gas 13 is branched off into a flue gas recirculation line 32 and admixed to the intake air 2. The recirculated exhaust gas 13 (also called flue gas) is typically branched off after a heat recovery steam generator 27 but can also be branched off directly after the turbine 7. In the example shown the recirculated flue gas is cooled in an optional flue gas re-cooler 31.

In the examples shown the first fuel distribution system comprises a first fuel gas 5 supply line with a combustor fuel control valve 22, 24. The second fuel distribution system comprises a second fuel gas 14 supply line and a control valve for high reactivity fuel 23, 25. The first fuel gas 5 and second fuel gas 14 are mixed to provide a first, respectively a second conditioned fuel 9, 10 for the combustor 4, 15. Depending on the burner type each fuel flow, i.e. the first fuel gas 5 and/or the second fuel gas 14 can also be directly injected into the combustor(s) 4, 15 (not shown).

All the explained advantages are not limited just to the specified combinations but can also be used in other combinations or alone without departing from the scope of the disclosure. Other possibilities are optionally conceivable, for example, for deactivating individual burners or groups of burners.

### List of designations

- 1: Compressor
- 2: Intake air
- 3: Compressed air
- 4: First combustor
- 5: First fuel gas
- 6: Hot gases
- 7: First turbine
- 8: Partially expanded hot gases
- 9: First conditioned fuel
- 10: Second conditioned fuel
- 11: Hot gases
- 12: Second turbine
- 13: Exhaust gases (for the waste heat recovery boiler)
- 14: Second fuel gas
- 15: Second combustor
- 16: Sensor
- 17: Controller
- 18: Shaft
- 19: Generator
- 20: Electrolyser
- 21: Hydrogen storage
- 22: First combustor fuel control valve
- 23: First control valve for highly reactive fuel
- 24: Second combustor fuel control valve
- 25: Second control valve for highly reactive fuel
- 26: Water
- 27: Heat recovery steam generator (HRSG)
- 28: Oxygen
- 29: Steam/ hot water
- 30: Oxygen storage
- 31: Flue gas re-cooler
- 32: Flue gas recirculation line

## Claims

1. A gas turbine plant with at least a compressor (1), a combustor (4, 15), a turbine (7, 12), and a fuel system,
**characterized in that** the gas turbine comprises a fuel supply system for the combustor (4, 15) with a first fuel distribution system for a first fuel gas (5) with a first fuel reactivity and a second fuel distribution system for a second fuel gas (14) with a second fuel reactivity, which is higher than the first fuel reactivity,
and **in that** gas turbine comprises a controller (17) configured to control the ratio of the mass flows of the second fuel gas (14) to the first fuel gas (5) supplied to the combustor (4, 15) depending on the combustion behavior of the combustor (4, 15) during operation.

2. The gas turbine plant according to claim 1, **characterized in that** the gas turbine is a sequential combustion gas turbine comprising a first combustor (4), a first turbine (7), second combustor (15) and a second turbine (12), and **in that**
the gas turbine comprises a fuel supply system for the first combustor (4) with a first fuel distribution system for the first fuel gas (5) and a second fuel distribution system for the second fuel gas (14) and a fuel supply system for the second combustor (15) with a first fuel distribution system for the first fuel gas (5) and a second fuel distribution system for the second fuel gas (14)
and **in that** the gas turbine controller (17) is configured to control the ratio of the mass flows of the second fuel gas (14) to the first fuel gas (5) supplied to the first combustor (4) depending on the combustion behavior in the first combustor (4) during operation.
and/or **in that** the gas turbine controller (17) is configured to control the ratio of the mass flows of the second fuel gas (14) to the first fuel gas (5) supplied to the second combustor (15) depending on the combustion behavior in the second combustor (15) during operation.

3. The gas turbine plant according to claim 1 or 2, **characterized in that** it comprises an electrolyzer (20) to generate hydrogen as second fuel gas (14) from water (26).

4. The gas turbine plant according to one of the claims 1 to 3, **characterized in that** it comprises a steam and/or hot water (29) supply pipe from a heat source of the gas turbine to the electrolyzer (20) for high temperature electrolysis.

5. The gas turbine plant according to one of the claims 1 to 5, **characterized in that** it comprises an oxygen (28) line from the electrolyzer (20) to the compressor (1), to the air intake (2) or to the combustor (4, 15) for injecting the oxygen (28) produced during the electrolysis of the water (26) for enhancing combustion.

6. The gas turbine plant according to one of the claims 1 to 5, **characterized in that** it comprises a hydrogen storage (21) for accumulating and storing at least part of the hydrogen produced by the electrolyzer (20) during a first operating period and releasing at least part of the stored hydrogen to feed it to the combustor (4, 15) during a second operating period to control the combustion behavior,
and/or **in that** it comprises an oxygen storage (21) for accumulating and storing at least part of the oxygen (28) produced by the electrolyzer (20) during a first operating period and releasing at least part of the stored oxygen (28) to feed it to the compressor (1) and/or to the combustor (4, 15) during a second operating period to control the combustion behavior.

7. The gas turbine according to one of the claims 1 to 6, **characterized in that** it comprises measurement devices to determine at least one of:
- the gas turbine load,
- a gas turbine operating temperature,
- the composition of the first fuel gas (5),
- the composition of the second fuel gas (14),
- the mass flow of the first fuel gas (5),
- the mass flow of the second fuel gas (14),
- the CO emissions,
- the unburned hydrocarbon content of the flue gases,
- the NOx emissions,
- the lean blow off limit,
- the pulsation in the combustor (4, 15),
- the flame in the combustor (4, 15).

8. Method for operating a gas turbine plant with at least a compressor (1), combustor (4, 15), a turbine (7, 12), and a fuel system, **characterized in that** a first fuel gas (5) with a first fuel reactivity and a second fuel gas (14) with a second fuel reactivity which is higher than the first fuel reactivity are injected into the combustor (4), and **in that** the ratio of the mass flows of the second fuel gas (14) to the first fuel gas (5) is controlled depending on the combustion behavior of the combustor (4, 15).

9. The method as claimed in claim 8, **characterized in that** the ratio of the mass flows of the second fuel gas (14) to the first fuel gas (5) is controlled depending on one of the following parameters indicative of the combustion behavior:
- the CO emission
- the NOx emission
- local overheating and / or flashback risk
- combustion pulsations,
and/or depending on the flue gas recirculation rate.

10. The method as claimed in one of claims 8 or 9, **characterized in that** the second fuel gas (14) is hydrogen produced in an electrolyzer (20) using electricity produced by a generator (19) of the plant and/or by high temperature electrolysis (20) using electricity produced by a generator (19) of the plant and using heat extracted from the gas turbine plant or a subsequent heat recovery steam generator (27).

11. The method as claimed in claim 10, **characterized in that** at least part of the hydrogen produced is stored in a hydrogen storage (21) during a first time period for later use during a second time period and/or that oxygen (28) produced by the electrolysis of water is injected into the combustor (4, 15) or upstream of the combustor (4, 15) to enhance the combustion.

12. The method as claimed in one of the claims 8 to 11, **characterized in that** in a sequential combustion gas turbine comprising a compressor (1), a first combustor (4), a first turbine (7), a second combustor (15), and a second turbine (12)
the ratio of the mass flows of the second fuel gas (14) to the first fuel gas (5) is controlled for the first combustor (4) depending on the combustion behavior of the first combustor (4) and/or
the ratio of the mass flows of the second fuel gas (14) to the first fuel gas (5) is controlled for the second combustor (4) depending on the combustion behavior of the second combustor (15).

13. The method as claimed in claim 12, **characterized in that** the ratio of the mass flows of the second fuel gas (14) to the first fuel gas (5) is greater than zero for the fuel supply to only the first combustor (4) to increase the flame stability at low load when the second combustor is not in operation, and/or
**in that** the ratio of the mass flows of the second fuel gas (14) to the first fuel gas (5) is greater than zero for the fuel supply to only the second combustor (15) to increase the flame stability at low load of the second combustor (15) to reduce CO emission due to low temperatures while the ratio of the mass flows of the second fuel gas (14) to the first fuel gas (5) kept at zero for the fuel supply to the first combustor (4).

14. The method as claimed in one of claims 8 to 13, **characterized in** the ratio of the mass flows of the second fuel gas (14) to the first fuel gas (5) is greater than zero for the fuel supply to only selected burners of a combustor or only to selected fuel nozzles of a burner.

15. The method as claimed in one of claims 8 to 14, **characterized in that** the ratio of the mass flows of the second fuel gas (14) to the first fuel gas (5) is controlled as a function of at least one of:
the total fuel gas mass flow injected into the gas turbine,
the gas turbine load or relative gas turbine load,
the composition of the first fuel gas (5),
the composition of the second fuel gas (14),
a gas turbine operating temperature,
the CO emissions,
the unburned hydrocarbon content in the exhaust gas (13),
the NOx emissions,
the lean blow off limit of a combustor (4, 15),
the combustor pulsation,
a flame monitoring signal,
a flashback risk.
